# EUROPÄISCHE PATENTANMELDUNG

(11) **EP 4 672 048 A1**
(43) Veröffentlichungstag der Anmeldung: **31.12.2025**
(21) Anmeldenummer: 24185384.5
(22) Anmeldetag: 28.06.2024
(51) Int. Cl.: G06F 21/44, H04L 9/32, H04L 9/40

(54) **VERFAHREN UND GERÄT ZUR BEREITSTELLUNG UND VALIDIERUNG KRYPTOGRAPHISCH GESICHERTER GERÄTEIDENTITÄTSINFORMATIONEN**

(71) Anmelder: Siemens Aktiengesellschaft, 80333 München (DE)
(72) Erfinder: Laurig, Frank, 92369 Sengenthal (DE); Palmin, Anna, 76187 Karlsruhe (DE)
(74) Vertreter: Siemens Patent Attorneys

(57) **Zusammenfassung**

Zur Bereitstellung und Validierung kryptographisch gesicherter Geräteidentitätsinformationen wird ein initiales Gerätezertifikat als Geräteidentitätsinformation erstellt und in einem Gerätespeicher gesichert. Das initiale Gerätezertifikat umfasst herstellerseitig ausgewählte und signierte Geräteinformationen, die zumindest ein Gerätekennzeichen, ein Geräteattribut bzw. eine Geräteeigenschaft und eine Angabe eines einem Gerät herstellerseitig zugeordneten öffentlichen Schlüssels umfassen. Nur nach erfolgreicher Geräteauthentifizierung wird anhand des initialen Gerätezertifikats ein zusätzliches Gerätzertifikat als weitere Geräteidentitätsinformation erstellt und im Gerätespeicher gesichert. Dabei umfasst das zusätzliche Gerätzertifikat verwender- oder bearbeiterseitig ausgewählte und signierte Geräteinformationen und bildet mit dem initialen Gerätezertifikat eine Zertifikate-Verkettung bildet. Nach erfolgreicher Geräteauthentifizierung ist anhand des zusätzlichen Gerätezertifikats zumindest ein weiteres zusätzliches Gerätezertifikat erzeugbar, das seitens eines nachfolgenden Verwenders oder Bearbeiters ausgewählte und signierte Geräteinformationen umfasst und im Gerätespeicher speicherbar ist. Bei einer Identitätsvalidierung des Geräts wird jeweils nur ein zuletzt erzeugtes oder ein für die Identitätsvalidierung vorgegebenes Gerätezertifikat aus dem Gerätespeicher ausgelesen und überprüft.

## Beschreibung

Die vorliegende Erfindung betrifft ein Verfahren zur Bereitstellung und Validierung kryptographisch gesicherter Geräteidentitätsinformationen, insbesondere von Identitätsinformationen zu Geräten innerhalb eines industriellen Automatisierungssystems, und ein Gerät zur Durchführung des Verfahrens.

Unabhängig vom grammatikalischen Geschlecht eines bestimmten Begriffes sind Personen mit männlicher, weiblicher oder anderer Geschlechteridentität mit umfasst.

Industrielle Automatisierungssysteme umfassen üblicherweise eine Vielzahl von über ein industrielles Kommunikationsnetz miteinander vernetzten Automatisierungsgeräten und dienen im Rahmen einer Fertigungs- oder Prozessautomatisierung zur Steuerung oder Regelung von Anlagen, Maschinen bzw. Geräten. Aufgrund zeitkritischer Rahmenbedingungen in industriellen Automatisierungssystemen werden zur Kommunikation zwischen Automatisierungsgeräten überwiegend Echtzeit-Kommunikationsprotokolle, wie PROFINET, PROFIBUS, Real-Time-Ethernet oder Time-Sensitive Networking (TSN), verwendet.

Industrielle Automatisierungsgeräte bzw. Endgeräte, die zur Steuerung von Maschinen bzw. Vorrichtungen zeitkritische Daten mit Kommunikationspartnern austauschen, sind besonders gegenüber einer Manipulation und einem Mitlesen sensibler Daten zu schützen. Eine Schutzmaßnahme ist insbesondere eine Verschlüsselung von Kommunikation von bzw. zu oben genannten Geräten. Hierfür werden üblicherweise Verschlüsselungsprotokolle, wie TLS (Transport Layer Security) oder SSL (Secure Socket Layer), verwendet, die für jedes Gerät eine Bereitstellung eines Schlüsselpaars und eines auf einem öffentlichen Schlüssel des Schlüsselpaars basierendes Zertifikat vorsehen.

Um eine sichere Kommunikation gewährleisten zu können, müssen alle Kommunikationspartner den Zertifikaten der oben genannten Geräte vertrauen können. Eine Verwendung von durch die Geräte erzeugten Self-Signed Zertifikaten ist insbesondere aufgrund möglicher "Man in the Middle"-Angriffe und eines problematischen Echtheitsnachweises grundsätzlich ungeeignet. Auch eine Geräte-externe Erzeugung von Schlüsselpaaren und Zertifikaten durch eine Certification Authority (CA) einer Public-Key-Infrastruktur (PKI) ist nicht gänzlich unproblematisch, da ein privater Schlüssel eines solchen Schlüsselpaars während einer Übertragung auf das jeweilige Gerät potentiell mitgelesen werden kann. Darüber hinaus müssen insbesondere TLS-Zertifikate aus Sicherheitsgründen regelmäßig erneuert werden. Daher sind die durch eine Certification Authority erzeugte Schlüsselpaare und Zertifikate regelmäßig auf die Geräte zu übertragen. In industriellen Automatisierungssystemen ist hiervon eine große Anzahl an Geräten betroffen.

Darüber hinaus finden in industriellen Automatisierungssystemen Secure Device Onboarding-Verfahren, beispielsweise gemäß BRSKI-Protokoll, zunehmend Anwendung, insbesondere im Kontext von Zero Trust-Konzepten. Derartige Verfahren ermöglichen einerseits Identitätsprüfungen (Proof of Identity) bzw. Originalitätsprüfungen (Proof of Originality) und andererseits eine sichere Bereitstellung von einsatzumgebungsspezifischen Schlüsselpaaren und Zertifikaten auf Geräte innerhalb eines industriellen Automatisierungssystems.

Aus WO 2022/028975 A1 ist ein Verfahren zum Verifizieren von Komponenten eines industriellen Kontrollsystems bekannt, bei dem ein erstes Modul eines Verifizierungssystems konfiguriert ist, eine Vertrauensbeziehung mit einer Komponente des industriellen Kontrollsystems aufzubauen und ein Komponentenzertifikat, das relevante Informationen bezüglich der Komponente aufweist, von der Komponente abzufragen. Ein zweites Modul des Verifizierungssystems ist konfiguriert, das Komponentenzertifikat basierend auf in einer vertrauenswürdigen Datenbank verwahrten relevanten Daten und interagierend mit der Komponente zu prüfen. Dabei umfassen die relevanten Daten eine oder mehrere Vertrauensketten bzw. eine oder mehrere Zertifikatssperrlisten. Dementsprechend werden bei der Prüfung eine oder mehrere Vertrauensketten bzw. eine oder mehrere Zertifikatssperrlisten validiert. Basierend auf einem Ergebnis der Prüfung wird eine Meldung zu generiert.

In WO 2024/7110524 A1 ist ein Verfahren zur Integration eines technischen Moduls in ein Leitsystem beschrieben, wobei das technische Modul weist eine Mehrzahl von technischen Geräten aufweist. Das Leitsystem ruft im Rahmen der Integration von einem computerimplementierten Modulinventar des technischen Moduls Informationen ab und hinterlegt in einem computerimplementierten Leitsysteminventar des Leitsystems, welche Informationen für eine Identifizierung der technischen Geräte des technischen Moduls ausgebildet sind. Unter Berücksichtigung der in dem computerimplementierten Leitsysteminventar hinterlegten Informationen des technischen Moduls werden Bedienungs-, Überwachungs- bzw. Automatisierungsfunktionen für die technische Anlage erstellt. Die in dem computerimplementierten Leitsysteminventar hinterlegten Informationen umfassen insbesondere Zertifikate, anhand derer die Identifizierung bzw. eine Originalitätsprüfung des jeweiligen technischen Geräts erfolgen kann. Vorteilhafterweise wertet das Leitsystem automatisiert eine Gültigkeit der Zertifikate aus. Für den Fall, dass eines der Zertifikate ungültig ist, wird das technische Modul von den Bedienungs-, Überwachungs- bzw. Automatisierungsfunktionen für die technische Anlage ausgeschlossen.

Die ältere internationale Patentanmeldung mit dem Anmeldeaktenzeichen PCT/EP2024/052680 betrifft ein Verfahren zur Integration einer Anlagenkomponente in ein Kommunikationsnetzwerk einer technischen Anlage. Zunächst wird ein Integrationsdienst der technischen Anlage durch die Anlagenkomponente ermittelt. Außerdem werden Informationen bezüglich von der Anlagenkomponente unterstützter Integrationsverfahrenstypen durch die Anlagenkomponente an den Integrationsdienst der technischen Anlage übermittelt. Unter Berücksichtigung von dem Integrationsdienst der technischen Anlage zur Verfügung stehenden Informationen bezüglich von dem Kommunikationsnetzwerk der technischen Anlage unterstützter Integrationsverfahrenstypen und der von der Anlagenkomponente übermittelten Informationen bezüglich von der Anlagenkomponente unterstützter Integrationsverfahrenstypen prüft der Integrationsdienst, ob eine automatisierte Integration der Anlagenkomponente in das Kommunikationsnetzwerk der technischen Anlage möglich ist. Für den Fall, dass die automatisierte Integration der Anlagenkomponente in das Kommunikationsnetzwerk der technischen Anlage möglich ist, erfolgt die Integration der Anlagenkomponente in das Kommunikationsnetzwerk der technischen Anlage.

Bisher erfolgt bei Originalitätsprüfungen üblicherweise nur eine Prüfung hinsichtlich eines jeweiligen Geräteherstellers. Vielfach ist eine Herkunft von einem ursprünglichen Hersteller für Endkunden gar nicht relevant. Dies gilt beispielsweise für Szenarien, bei denen beispielsweise ein Maschinenbauer eine Maschine herstellt und dabei Komponenten unterschiedlicher Hersteller verbaut. Für Endkunden bzw. Nutzer oder Käufer der Maschine ist dabei die Herkunft der Komponenten häufig deutlich weniger relevant als die Herkunft der Maschine oder einer wesentlichen Komponente der Maschine von einem bestimmten Hersteller.

Der vorliegenden Erfindung liegt daher die Aufgabe zugrunde, ein effizientes Verfahren zur Bereitstellung und Validierung kryptographisch gesicherter Geräteidentitätsinformationen zu schaffen, die für Gerätenutzer tatsächlich relevant sind bzw. selektiv für Gerätenutzer verfügbar gemacht werden, und eine geeignete Vorrichtung zur technischen Realisierung des Verfahrens anzugeben.

Diese Aufgabe wird erfindungsgemäß durch ein Verfahren mit den in Patentanspruch 1 angegebenen Merkmalen und durch ein Gerät mit den in Anspruch 12 angegebenen Merkmalen gelöst. Vorteilhafte Weiterbildungen der vorliegenden Erfindung sind in den abhängigen Patentansprüchen angegeben.

Entsprechend dem erfindungsgemäßen Verfahren zur Bereitstellung und Validierung kryptographisch gesicherter Geräteidentitätsinformationen wird ein initiales Gerätezertifikat als Geräteidentitätsinformation erstellt und in einem Gerätespeicher gesichert. Dabei umfasst das initiale Gerätezertifikat herstellerseitig ausgewählte und signierte Geräteinformationen, die zumindest ein Gerätekennzeichen, ein Geräteattribut bzw. eine Geräteeigenschaft und zusätzlich eine Angabe eines einem Gerät herstellerseitig zugeordneten öffentlichen Schlüssels umfassen. Nur nach erfolgreicher Geräteauthentifizierung anhand des initialen Gerätezertifikats wird ein zusätzliches Gerätzertifikat als weitere Geräteidentitätsinformation erstellt und im Gerätespeicher gesichert wird.

Das zusätzliche Gerätzertifikat umfasst erfindungsgemäß verwender- oder bearbeiterseitig ausgewählte und signierte Geräteinformationen und bildet mit dem initialen Gerätezertifikat eine Zertifikate-Verkettung. Nach erfolgreicher Geräteauthentifizierung anhand des zusätzlichen Gerätezertifikats ist zumindest ein weiteres zusätzliches Gerätezertifikat erzeugbar, das seitens eines nachfolgenden Verwenders oder Bearbeiters ausgewählte und signierte Geräteinformationen umfasst und im Gerätespeicher speicherbar ist. Das initiale Gerätezertifikat kann beispielsweise ein Initial Device Identitifier- bzw. X.509-Zertifikat sein, während das zusätzliche oder weitere zusätzliche Gerätezertifikat insbesondere ein Initial Device Identitifier-, ein Locally Significant Device Identifier- bzw. X.509-Zertifikat sein kann.

Bei einer Identitätsvalidierung des Geräts wird erfindungsgemäß jeweils nur ein zuletzt erzeugtes oder ein für die Identitätsvalidierung vorgegebenes Gerätezertifikat aus dem Gerätespeicher ausgelesen und überprüft. Vorzugsweise wird bei der Identitätsvalidierung des Geräts überprüft, ob das Gerät Zugriff auf einen privaten Schlüssel hat, der zum vorgegebenen oder zuletzt erzeugten Gerätezertifikat korrespondiert. Insbesondere kann die Identitätsvalidierung automatisiert entsprechend Bootstrapping Remote Secure Key Infrastructure-Protokoll (BRSKI) bzw. entsprechend OPC Unified Architecture-Protokoll, Part 21, Device Onboarding, erfolgen.

Die vorliegende Erfindung ermöglicht bei Originalitätsprüfungen durch obige Zertifikate-Verkettung eine selektive Berücksichtigung von Zwischeninstanzen entlang einer Wertschöpfungskette von Komponentenlieferanten über Systemintegratoren bis hin zu Endkunden bzw. Nutzern oder Betreibern einer technischen Anlage oder eines komplexen technischen Geräts. Auf diese Weise können Echtheit und Integrität von Geräteidentitätsinformationen entlang vielgliedriger Wertschöpfungsketten sichergestellt und effizient geprüft werden.

Vorzugsweise wird bei einer Überprüfung des initialen Gerätezertifikats überprüft, ob das Gerät Zugriff auf einen privaten Schlüssel hat, der zum herstellerseitig zugeordneten öffentlichen Schlüssel korrespondiert. Alternativ oder zusätzlich kann ein Auslesen des initialen Gerätezertifikats bzw. des zumindest einen zusätzlichen Gerätezertifikats aus dem Gerätespeicher selektiv gesperrt werden. Insbesondere kann das initiale Gerätezertifikat bzw. das zumindest eine zusätzliche Gerätezertifikat nur für einen jeweils unmittelbar nachfolgenden oder ausgewählten Verwender oder Bearbeiter bzw. für einen Hersteller zum Auslesen freigegeben werden. Dies ermöglicht eine besonders sichere Verwendung initialer bzw. zusätzlicher Gerätezertifikate. Vorteilhafterweise wird das für die Identitätsvalidierung zu verwendende Gerätezertifikat herstellerseitig bzw. verwender- oder bearbeiterseitig vorgegeben. Dementsprechend werden nicht für die Identitätsvalidierung vorgegebene Gerätezertifikate gegen ein Auslesen gesperrt.

Entsprechend einer weiteren vorteilhaften Ausgestaltung der vorliegenden Erfindung erfolgt die Identitätsvalidierung im Rahmen einer durch und für das Gerät angeforderten Autorisierung eines Netzwerkzugriffs durch eine Registrierungsinstanz. Dabei übermittelt das Gerät zur Autorisierung des Netzwerkzugriffs eine das zuletzt erzeugte oder das für die Identitätsvalidierung vorgegebene Gerätezertifikat umfassende Anforderung an die Registrierungsinstanz. Die Registrierungsinstanz erstellt nach einer erfolgreichen Identitätsvalidierung ein zusätzliches oder weiteres zusätzliches Gerätezertifikat und übermittelt dieses an das Gerät. Das Gerät kann sich dann für den Netzwerkzugriff anhand des zusätzlichen oder weiteren zusätzlichen Gerätezertifikats authentisieren. Insbesondere kann für das Gerät durch die Registrierungsinstanz von einer hersteller-, verwender- oder bearbeiterseitigen Überprüfungsinstanz auf Basis des zuletzt erzeugten oder des für die Identitätsvalidierung vorgegebenen Gerätezertifikats eine Originalitätsbestätigung angefordert werden, wobei die Identitätsvalidierung erst nach Vorliegen der Originalitätsbestätigung erfolgreich abgeschlossen wird. Darüber hinaus kann durch oder für das Gerät von der hersteller-, verwender- oder bearbeiterseitigen Überprüfungsinstanz eine kryptographisch gesicherte Bestätigung angefordert werden, dass ein ausgewähltes Netzwerk, für das die Autorisierung des Netzwerkzugriffs angefordert wird, eine vertrauenswürdige Umgebung für das Gerät ist. In diesem Fall verbindet sich das Gerät erst nach Vorliegen der kryptographisch gesicherten Bestätigung mit dem ausgewählten Netzwerk. Insgesamt ermöglichen obige Ausführungsvarianten ein effizientes und besonders sicheres Geräte-Onboarding in einer Ziel-Netzwerkumgebung.

Das erfindungsgemäße Gerät ist zur Durchführung eines Verfahrens entsprechend vorangehenden Ausführungen vorgesehen sowie dafür ausgestaltet und eingerichtet, dass ein initiales Gerätezertifikat als Geräteidentitätsinformation erstellt und in einem Gerätespeicher gesichert wird, wobei das initiale Gerätezertifikat herstellerseitig ausgewählte und signierte Geräteinformationen umfasst, die zumindest ein Gerätekennzeichen, ein Geräteattribut und/oder eine Geräteeigenschaft und eine Angabe eines einem Gerät herstellerseitig zugeordneten öffentlichen Schlüssels umfassen. Außerdem ist das Gerät dafür ausgestaltet und eingerichtet, dass nur nach erfolgreicher Geräteauthentifizierung anhand des initialen Gerätezertifikats ein zusätzliches Gerätzertifikat als weitere Geräteidentitätsinformation erstellt und im Gerätespeicher gesichert wird, Dabei umfasst das zusätzliche Gerätzertifikat verwender- oder bearbeiterseitig ausgewählte und signierte Geräteinformationen, und das zusätzliche Gerätezertifikat bildet mit dem initialen Gerätezertifikat eine Zertifikate-Verkettung. Nach erfolgreicher Geräteauthentifizierung ist anhand des zusätzlichen Gerätezertifikats zumindest ein weiteres zusätzliches Gerätezertifikat erzeugbar, das seitens eines nachfolgenden Verwenders oder Bearbeiters ausgewählte und signierte Geräteinformationen umfasst und im Gerätespeicher speicherbar ist. Darüber hinaus ist das Gerät dafür ausgestaltet und eingerichtet, dass bei einer Identitätsvalidierung des Geräts jeweils nur ein zuletzt erzeugtes oder ein für die Identitätsvalidierung vorgegebenes Gerätezertifikat aus dem Gerätespeicher ausgelesen und überprüft wird.

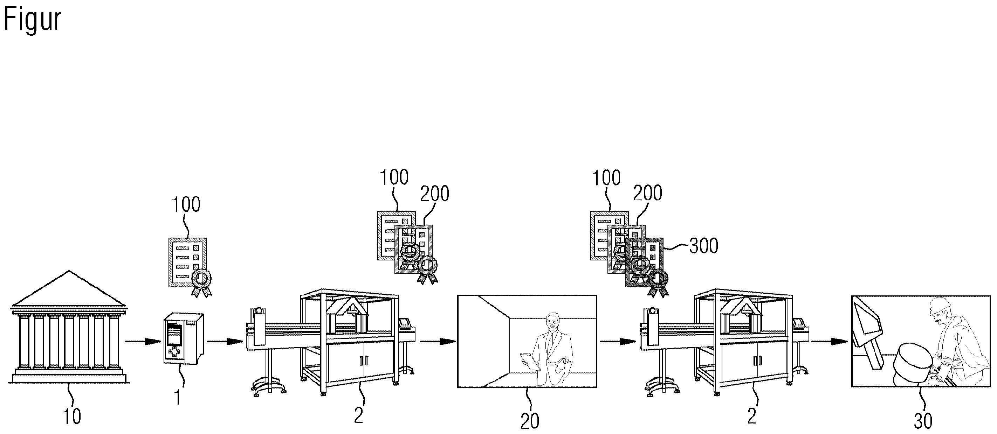

Die vorliegende Erfindung wird an einem Ausführungsbeispiel anhand der Zeichnung näher erläutert. Es zeigt
- Figur: eine schematische Darstellung einer Bereitstellung und Validierung kryptographisch gesicherter Geräteidentitätsinformationen entlang einer Kette von einem Gerätehersteller, über einen Maschinen- oder Anlagenhersteller und einen Distributor bis zu einem Endkunden.

Das in Figur dargestellte Ausführungsbeispiel ist lediglich exemplarisch für eine Herstellung eines Geräts und dessen nachfolgende Bearbeitung bzw. Verwendung entlang einer allgemeinen vielgliedrigen Wertschöpfungskette. Im vorliegenden Ausführungsbeispiel ist ein Gerät 1 durch einen Gerätehersteller 10 hergestellt worden. Herstellerseitig wird ein initiales Gerätezertifikat 100 als erste Geräteidentitätsinformation erstellt und in einem Gerätespeicher des Geräts 1 gesichert. Dabei umfasst das initiale Gerätezertifikat 100 herstellerseitig ausgewählte und signierte Geräteinformationen. Diese Geräteinformationen umfassen wiederum zumindest ein Gerätekennzeichen, ein Geräteattribut bzw. eine Geräteeigenschaft und eine Angabe eines einem Gerät herstellerseitig zugeordneten öffentlichen Schlüssels.

In einem nachfolgenden Verwendungsschritt wird das Gerät 1 durch einen Maschinen- oder Anlagenhersteller als Komponente einer Maschine 2 bzw. Anlage verbaut. Seitens des Maschinen- oder Anlagenherstellers wird ein zusätzliches Gerätezertifikat 200 als zweite Geräteidentitätsinformation erzeugt und im Gerätespeicher hinterlegt, allerdings nur nach erfolgreicher Geräteauthentifizierung anhand des initialen Gerätezertifikats 100. Das zusätzliche Gerätezertifikat 200 bildet mit dem initialen Gerätezertifikat 100 eine Zertifikate-Verkettung. Insbesondere wird bei einer Überprüfung des initialen Gerätezertifikats 100 überprüft wird, ob das Gerät 1 Zugriff auf einen privaten Schlüssel hat, der zum herstellerseitig zugeordneten öffentlichen Schlüssel korrespondiert.

Ein Auslesen des initialen Gerätezertifikats 100 bzw. des zusätzlichen Gerätezertifikats 200 aus dem Gerätespeicher kann selektiv gesperrt werden. Dies gilt in entsprechender Weise auch für nachfolgend erstellte weitere zusätzliche Gerätezertifikate. Beispielsweise kann das initiale Gerätezertifikat 100 bzw. das zusätzliche Gerätezertifikat 200 nur für einen jeweils unmittelbar nachfolgenden oder ausgewählten Verwender oder Bearbeiter des Geräts 1 sowie vorteilhafterweise für den Gerätehersteller 10 und für den Maschinen- oder Anlagenhersteller zum Auslesen freigegeben werden. Insbesondere kann das jeweilige für eine Identitätsvalidierung zu verwendende Gerätezertifikat herstellerseitig bzw. verwender- oder bearbeiterseitig vorgegeben werden. In diesem Fall werden vorzugsweise nicht für die Identitätsvalidierung vorgegebene Gerätezertifikate gegen ein Auslesen gesperrt.

Nach einem Verbauen des Geräts 1 als Komponente der Maschine 2 bzw. Anlage wird diese im vorliegenden Ausführungsbeispiel durch den Maschinen- bzw. Anlagenhersteller an einen Distributor 20 ausgeliefert. Nach erfolgreicher Geräteauthentifizierung anhand des zusätzlichen Gerätezertifikats 200 wird dort ein weiteres zusätzliches Gerätezertifikat 300 als dritte Geräteidentitätsinformation erzeugt. Das weitere zusätzliche Gerätezertifikat 300 umfasst seitens des Distributors 20 ausgewählte und signierte Geräteinformationen und wird analog zu obigen Ausführungen im Gerätespeicher gespeichert. Dabei bildet das weitere zusätzliche Gerätezertifikat 300 mit dem initialen Gerätezertifikat 100 und dem zusätzlichen Gerätezertifikat 200 eine Zertifikate-Verkettung. Bei der Identitätsvalidierung des in der Maschine 2 bzw. Anlage verbauten Geräts 1, beispielsweise durch einen Endkunden 30, der die Maschine 2 bzw. Anlage vom Distributor 20 bezieht, wird jeweils nur ein zuletzt erzeugtes oder ein für die Identitätsvalidierung vorgegebenes Gerätezertifikat 100, 200, 300 aus dem Gerätespeicher ausgelesen und überprüft. Insbesondere müssen hierfür nicht alle oder mehrere der Gerätezertifikat 100, 200, 300 aus dem Gerätespeicher ausgelesen werden. Damit kann je nach anwendungsspezifischen Anforderungen entweder nur die erste geräteherstellerseitige Geräteidentität, nur die zweite maschinen- oder anlagenherstellerseitige Geräteidentität oder nur die distributorseitige Geräteidentität geprüft werden. Bei der Identitätsvalidierung des in der Maschine 2 bzw. Anlage verbauten Geräts 1 wird im vorliegenden Ausführungsbeispiel überprüft, ob das Gerät 1 Zugriff auf einen privaten Schlüssel hat, der zum vorgegebenen oder zuletzt erzeugten Gerätezertifikat 100, 200, 300 korrespondiert.

Das initiale Gerätezertifikat 100 kann beispielsweise ein Initial Device Identitifier- bzw. X.509-Zertifikat ist. In entsprechender Weise können das zusätzliche Gerätezertifikat 200 und das weitere zusätzliche Gerätezertifikat 300 ein Initial Device Identitifier-, ein Locally Significant Device Identifier- bzw. X.509-Zertifikat sein. Auf Basis derartiger Zertifikate kann die Identitätsvalidierung beispielweise automatisiert entsprechend Bootstrapping Remote Secure Key Infrastructure-Protokoll (BRSKI) bzw. entsprechend OPC Unified Architecture-Protokoll, Part 21, Device Onboarding, erfolgen. Insbesondere das BRSKI-Protokoll ermöglicht in vielen Anwendungsumgebungen eine automatisierte Initialisierung bzw. Konfiguration von Geräten, selbst wenn sie sich ohne vorherige Konfiguration in einem endkundenseitigen Netzwerk bzw. in einem Netzwerk mit begrenzter Konnektivität befinden.

Endkundenseitig kann zusätzlich zu den Gerätezertifikaten 100, 200, 300 analog zu oben beschriebener Vorgehensweise ein weiteres Gerätezertifikat als im vorliegenden Ausführungsbeispiel vierte Geräteidentitätsinformation erzeugt werden. Insbesondere kann die Identitätsvalidierung endkundenseitig im Rahmen einer durch und für das Gerät 1 angeforderten Autorisierung eines Netzwerkzugriffs durch eine Registrierungsinstanz, etwa eine Local Registration Authority (LRA), erfolgen. Zur Autorisierung des Netzwerkzugriffs in einer Endkundenumgebung übermittelt das Gerät 1 im vorliegenden Ausführungsbeispiel eine Anforderung, die das zuletzt erzeugte oder das für die Identitätsvalidierung jeweils vorgegebene Gerätezertifikat 100, 200, 300 umfasst, an die Registrierungsinstanz. Nach einer erfolgreichen Identitätsvalidierung erstellt die Registrierungsinstanz das endkundenseitige Gerätezertifikat und übermittelt dieses an das Gerät 1. Dementsprechend kann sich das Gerät 1 für den Netzwerkzugriff anhand des endkundenseitigen Gerätezertifikats authentisieren. Für eine Realisierung einer Autorisierung eines Netzwerkzugriffs ist endkundenseitig nicht unbedingt eine eigene Registrierungsinstanz erforderlich. Vielmehr können hierfür Dienste genutzt werden, die von Dritten auf Basis einer Manufacturer Authorized Signing Authority (MASA) bereitgestellt werden. Ein Geräte-Onboarding mittels eines MASA-Dienstes erfolgt dabei üblicherweise in mehreren Schritten:
1. Geräteidentifikation und Registrierung
   Das Gerät 1 wird identifiziert und registriert. Dabei erhält es eine eindeutige Kennung, die für eine Kommunikation mit dem MASA-Dienst verwendet wird.
2. Zertifikatserstellung
   Das Gerät 1 generiert ein Schlüsselpaar, umfassend einen öffentlichen und einen privaten Schlüssel, und beantragt ein X.509-Zertifikat. Dieses Zertifikat wird von der MASA signiert und dient zur Authentifizierung des Geräts 1.
3. Gutscheinanforderung
   Das Gerät 1 fordert einen Gutschein (Voucher) vom MASA-Dienst an. Der Gutschein enthält Informationen über das Gerät 1 und seine Berechtigungen.
4. Gutscheinsignierung
   Der MASA-Dienst signiert den Gutschein mit seinem privaten Schlüssel.
5. Gutscheinübertragung an das Gerät
   Der signierte Gutschein wird an das Gerät 1 übertragen. Das Gerät kann diesen Gutschein verwenden, um beispielsweise Software-Updates oder Konfigurationsänderungen zu erhalten.
6. Verwendung des Gutscheins
   Das Gerät 1 präsentiert den Gutschein, wenn es mit einem Dienst kommuniziert, der die Software-Updates oder Konfigurationsänderungen bereitstellt. Der Dienst überprüft eine Signatur des Gutscheins mit einem öffentlichen Schlüssel des MASA-Dienstes, um eine Echtheit des Gutscheins zu bestätigen.

Durch obige Schritte wird sichergestellt, dass nur vertrauenswürdige Geräte Updates und Konfigurationsänderungen erhalten können, insbesondere in der Endkundenumgebung.

Grundsätzlich kann für das Gerät 1 durch die Registrierungsinstanz von einer hersteller-, verwender- oder bearbeiterseitigen Überprüfungsinstanz auf Basis des zuletzt erzeugten oder des für die Identitätsvalidierung vorgegebenen Gerätezertifikats 100, 200, 300 eine Originalitätsbestätigung angefordert werden. Dabei wird die Identitätsvalidierung erst nach Vorliegen der Originalitätsbestätigung erfolgreich abgeschlossen. Darüber hinaus kann durch oder für das Gerät 1 von der hersteller-, verwender- oder bearbeiterseitigen Überprüfungsinstanz eine kryptographisch gesicherte Bestätigung angefordert werden, dass ein ausgewähltes Netzwerk, für das die Autorisierung des Netzwerkzugriffs angefordert wird, eine vertrauenswürdige Umgebung für das Gerät 1 ist. In diesem Fall verbindet sich das Gerät erst nach Vorliegen der kryptographisch gesicherten Bestätigung mit dem ausgewählten Netzwerk.

## Patentansprüche

1. Verfahren zur Bereitstellung und Validierung kryptographisch gesicherter Geräteidentitätsinformationen, bei dem
- ein initiales Gerätezertifikat (100) als Geräteidentitätsinformation erstellt und in einem Gerätespeicher gesichert wird, wobei das initiale Gerätezertifikat (100) herstellerseitig ausgewählte und signierte Geräteinformationen umfasst, die zumindest ein Gerätekennzeichen, ein Geräteattribut und/oder eine Geräteeigenschaft und eine Angabe eines einem Gerät (1) herstellerseitig zugeordneten öffentlichen Schlüssels umfassen,
- nur nach erfolgreicher Geräteauthentifizierung anhand des initialen Gerätezertifikats (100) ein zusätzliches Gerätzertifikat (200) als weitere Geräteidentitätsinformation erstellt und im Gerätespeicher gesichert wird, wobei
- das zusätzliche Gerätzertifikat (200) verwender- oder bearbeiterseitig ausgewählte und signierte Geräteinformationen umfasst,
- das zusätzliche Gerätezertifikat (200) mit dem initialen Gerätezertifikat (100) eine Zertifikate-Verkettung bildet,
- nach erfolgreicher Geräteauthentifizierung anhand des zusätzlichen Gerätezertifikats (200) zumindest ein weiteres zusätzliches Gerätezertifikat (300) erzeugbar ist, das seitens eines nachfolgenden Verwenders oder Bearbeiters ausgewählte und signierte Geräteinformationen umfasst und im Gerätespeicher speicherbar ist,
- bei einer Identitätsvalidierung des Geräts (1) jeweils nur ein zuletzt erzeugtes oder ein für die Identitätsvalidierung vorgegebenes Gerätezertifikat (100, 200, 300) aus dem Gerätespeicher ausgelesen und überprüft wird.

2. Verfahren nach Anspruch 1,
bei dem bei einer Überprüfung des initialen Gerätezertifikats (100) überprüft wird, ob das Gerät (1) Zugriff auf einen privaten Schlüssel hat, der zum herstellerseitig zugeordneten öffentlichen Schlüssel korrespondiert.

3. Verfahren nach einem der Ansprüche 1 oder 2,
bei dem ein Auslesen des initialen Gerätezertifikats (100) und/oder des zumindest einen zusätzlichen Gerätezertifikats (200, 300) aus dem Gerätespeicher selektiv gesperrt wird.

4. Verfahren nach Anspruch 3,
bei dem das initiale Gerätezertifikat (100) und/oder das zumindest eine zusätzliche Gerätezertifikat (200, 300) nur für einen jeweils unmittelbar nachfolgenden oder ausgewählten Verwender oder Bearbeiter (20, 30) und/oder für einen Hersteller (10) zum Auslesen freigegeben wird.

5. Verfahren nach einem der Ansprüche 3 oder 4,
bei dem das für die Identitätsvalidierung zu verwendende Gerätezertifikat herstellerseitig und/oder verwender- oder bearbeiterseitig vorgegeben wird und bei dem nicht für die Identitätsvalidierung vorgegebene Gerätezertifikate gegen ein Auslesen gesperrt werden.

6. Verfahren nach einem der Ansprüche 1 bis 5,
bei dem bei der Identitätsvalidierung des Geräts überprüft wird, ob das Gerät Zugriff auf einen privaten Schlüssel hat, der zum vorgegebenen oder zuletzt erzeugten Gerätezertifikat korrespondiert.

7. Verfahren nach einem der Ansprüche 1 bis 6,
bei dem die Identitätsvalidierung im Rahmen einer durch und für das Gerät angeforderten Autorisierung eines Netzwerkzugriffs durch eine Registrierungsinstanz erfolgt, bei dem das Gerät zur Autorisierung des Netzwerkzugriffs eine das zuletzt erzeugte oder das für die Identitätsvalidierung vorgegebene Gerätezertifikat umfassende Anforderung an die Registrierungsinstanz übermittelt, bei dem die Registrierungsinstanz nach einer erfolgreichen Identitätsvalidierung ein zusätzliches oder weiteres zusätzliches Gerätezertifikat erstellt und an das Gerät übermittelt und bei dem sich das Gerät für den Netzwerkzugriff anhand des zusätzlichen oder weiteren zusätzlichen Gerätezertifikats authentisiert.

8. Verfahren nach Anspruch 7,
bei dem für das Gerät durch die Registrierungsinstanz von einer hersteller-, verwender- oder bearbeiterseitigen Überprüfungsinstanz auf Basis des zuletzt erzeugten oder des für die Identitätsvalidierung vorgegebenen Gerätezertifikats eine Originalitätsbestätigung angefordert wird und bei dem die Identitätsvalidierung erst nach Vorliegen der Originalitätsbestätigung erfolgreich abgeschlossen wird.

9. Verfahren nach Anspruch 8,
bei dem durch oder für das Gerät von der hersteller-, verwender- oder bearbeiterseitigen Überprüfungsinstanz eine kryptographisch gesicherte Bestätigung angefordert wird, dass ein ausgewähltes Netzwerk, für das die Autorisierung des Netzwerkzugriffs angefordert wird, eine vertrauenswürdige Umgebung für das Gerät ist und bei dem sich das Gerät erst nach Vorliegen der kryptographisch gesicherten Bestätigung mit dem ausgewählten Netzwerk verbindet.

10. Verfahren nach einem der Ansprüche 1 bis 9,
bei dem das initiale Gerätezertifikat ein Initial Device Identitifier- und/oder X.509-Zertifikat ist und bei dem das zusätzliche oder weitere zusätzliche Gerätezertifikat ein Initial Device Identitifier-, ein Locally Significant Device Identifier- und/oder X.509-Zertifikat ist.

11. Verfahren nach einem der Ansprüche 1 bis 10,
bei dem die Identitätsvalidierung automatisiert entsprechend Bootstrapping Remote Secure Key Infrastructure-Protokoll und/oder entsprechend OPC Unified Architecture-Protokoll, insbesondere Part 21, Device Onboarding, erfolgt.

12. Gerät zur Durchführung eines Verfahrens nach einem der Ansprüche 1 bis 11, wobei das Endgerät dafür ausgestaltet und eingerichtet ist, dass
- ein initiales Gerätezertifikat als Geräteidentitätsinformation erstellt und in einem Gerätespeicher gesichert wird, wobei das initiale Gerätezertifikat herstellerseitig ausgewählte und signierte Geräteinformationen umfasst, die zumindest ein Gerätekennzeichen, ein Geräteattribut und/oder eine Geräteeigenschaft und eine Angabe eines einem Gerät herstellerseitig zugeordneten öffentlichen Schlüssels umfassen,
- nur nach erfolgreicher Geräteauthentifizierung anhand des initialen Gerätezertifikats ein zusätzliches Gerätzertifikat als weitere Geräteidentitätsinformation erstellt und im Gerätespeicher gesichert wird, wobei
- das zusätzliche Gerätzertifikat verwender- oder bearbeiterseitig ausgewählte und signierte Geräteinformationen umfasst,
- das zusätzliche Gerätezertifikat mit dem initialen Gerätezertifikat eine Zertifikate-Verkettung bildet,
- nach erfolgreicher Geräteauthentifizierung anhand des zusätzlichen Gerätezertifikats zumindest ein weiteres zusätzliches Gerätezertifikat erzeugbar ist, das seitens eines nachfolgenden Verwenders oder Bearbeiters ausgewählte und signierte Geräteinformationen umfasst und im Gerätespeicher speicherbar ist,
- bei einer Identitätsvalidierung des Geräts jeweils nur ein zuletzt erzeugtes oder ein für die Identitätsvalidierung vorgegebenes Gerätezertifikat aus dem Gerätespeicher ausgelesen und überprüft wird.
